# EUROPÄISCHE PATENTSCHRIFT

(11) **EP 3 864 322 B1**
(45) Veröffentlichungstag und Bekanntmachung des Hinweises auf die Patenterteilung: **24.12.2025**
(21) Anmeldenummer: 19790136.6
(22) Anmeldetag: 27.09.2019
(51) Int. Cl.: F16H 57/021, F16H 57/03

(54) **GETRIEBE MIT GETRIEBEGEHÄUSE**
TRANSMISSION COMPRISING A TRANSMISSION HOUSING
BOÎTE DE VITESSES POURVUE D'UN CARTER

(30) Priorität: 12.10.2018 DE 102018008069
(43) Veröffentlichungstag der Anmeldung: 18.08.2021
(73) Patentinhaber: SEW-EURODRIVE GmbH & Co. KG, 76646 Bruchsal (DE)
(72) Erfinder: BRONNER, Aaron, 75433 Maulbronn (DE); BARREIRO, Pablo, 76133 Karlsruhe (DE); HERMES, Jörg, 76646 Bruchsal (DE); HOFFMEISTER, Jürgen, 76139 Karlsruhe (DE)
(86) Internationale Anmeldenummer: PCT/EP2019/025322
(87) Internationale Veröffentlichungsnummer: WO 2020/074118

(56) Entgegenhaltungen:
- CN-A- 102 691 779
- CN-A- 102 691 779
- CN-A- 107 387 735
- CN-A- 107 387 735
- DE-A1- 102016 011 664
- DE-A1- 102016 011 664
- JP-A- 2017 150 536
- JP-A- 2017 150 536
- US-A1- 2018 259 056
- US-A1- 2018 259 056

## Beschreibung

Die Erfindung betrifft ein Getriebe mit Getriebegehäuse.

Es ist allgemein bekannt, dass ein Getriebe ein Getriebegehäuse aufweist.

Aus der US 2018/259056 A1 ist als nächstliegender Stand der Technik ein Gehäuse für ein Fahrzeug bekann, in dem ein mechanisches Element gespeichert werden kann.

Aus der JP 2017 150536 A ist ein Verfahren zum Herstellen eines Gehäuses bekannt.

Aus der DE 10 2016 011664 A1 ist ein Herstellverfahren für ein Getriebe bekannt.

Aus der CN 102 691 779 A ist ein komplex geformtes Gehäuseteil bekannt.

Aus der CN 107 387 735 A ist ein Getriebegehäuse bekannt.

Der Erfindung liegt daher die Aufgabe zugrunde, ein Getriebegehäuse möglichst materialsparend auszubilden.

Erfindungsgemäß wird die Aufgabe bei dem Getriebe mit Getriebegehäuse nach den in Anspruch 1 angegebenen Merkmalen gelöst.

Wichtige Merkmale der Erfindung bei dem Getriebe mit Getriebegehäuse, insbesondere Getriebegehäuseteil, wobei das Getriebegehäuse eine aus Stegen zusammengesetzte Tragstruktur aufweist und das Getriebegehäuse mit Stegen der Tragstruktur verbundene Verbindungsflächen aufweist,
wobei die Tragstruktur samt den Verbindungsflächen additiv gefertigt sind, insbesondere mittels 3D-Druck,

insbesondere wobei die Verbindungsflächen mit den Stegen ein öldichtes Gehäuseteil bilden.

Von Vorteil ist dabei, dass mittels der additiven Fertigung durch einen 3D-Drucker das Getriebegehäuse mit einer bionischen Tragstruktur ausführbar ist, welche den bei Betrieb auftretenden oder zulässigen Kraftfluss durchleitet, und die Tragstruktur mittels Verbindungsflächen öldicht ausführbar ist. Die bionische Tragstruktur weist somit auch einen oder mehrere Stege auf, die durch den Innenraum des Getriebegehäuses geführt sind. Somit ist der Kraftfluss zwischen den Lageraufnahmen und/oder der Aufnahme für Getriebedeckel optimal durch die Tragstruktur führbar. Die Dicke der Stege ist auf den Kraftfluss jeweils abstimmbar. Somit ist die Tragstruktur nur mit einer dem Kraftfluss entsprechenden Materialverteilung ausführbar, so dass das Getriebe also materialsparend herstellbar ist. Zusätzlich zum Kraftfluss sind auch weitere Funktionen, wie beispielsweise Ölkanäle, in die Tragstruktur integrierbar, wobei dann die Dicke der Stege der Tragstruktur entsprechend erhöht wird. Allerdings bewirkt die hohle Ausführung der Stege eine hohe Steifigkeit, so dass kein großer Zusatzmaterialaufwand für die Integration der Ölführung in die Tragstruktur notwendig ist. Eine separate Verrohrung mit einem Rohrsystem ist somit einsparbar. Außerdem verbessert die Integration der Ölführung den thermischen Ausgleich und es wird eine einheitliche Temperatur des Getriebes bewirkt.

Erfindungsgemäß sind die Stege miteinander und mit einer Lageraufnahme und Aufnahme für einen Getriebedeckel verbunden. Von Vorteil ist dabei, dass die bei Betrieb auftretenden Kräfte, insbesondere Querkräfte, direkt von den Lageraufnahmen über die Tragstruktur abgeleitet werden und somit die Verbindungsflächen kraftfrei oder zumindest kraftarm betreibbar sind, insbesondere also Öldichtheit auf diese Weise materialsparend gewährleitbar sind.

Bei einer vorteilhaften Ausgestaltung verbindet einer der Stege, insbesondere ein Henkel-förmiger Steg, zwei Stellen des Getriebedeckels und von dem Getriebegehäuse, insbesondere ist von der Tragstruktur beabstandet. Von Vorteil ist dabei, dass der Kraftfluss auch durch den Innenraum leitbar ist, soweit nicht dort ein Verzahnungsteil des Getriebes angeordnet ist.

Bei einer vorteilhaften Ausgestaltung ist jeder Steg der Tragstruktur unterschiedlich geformt im Vergleich zu jedem anderen Steg der Tragstruktur. Von Vorteil ist dabei, dass der Steg bionisch formbar ist. Somit ist die Form optimiert für den Kraftfluss. Somit ist mit geringem Materialaufwand der Kraftfluss effektiv durchleitbar.

Bei einer vorteilhaften Ausgestaltung ist jede Verbindungsfläche unterschiedlich geformt zu jeder anderen Verbindungsfläche des Getriebegehäuses. Von Vorteil ist dabei, dass mit möglichst wenig Material die Öldichtheit und somit die Gehäusefunktion gewährleistbar ist. Denn die Verbindungsflächen sind kraftfrei betreibbar.

Bei einer vorteilhaften Ausgestaltung weist jeder Steg an zwei unterschiedlichen Stellen zumindest zwei zueinander unterschiedliche Querschnittsflächen aufweist. Von Vorteil ist dabei, dass der Verlauf des Querschnitts des Stegs in Stegrichtung für den durchzuleitenden Kraftfluss optimierbar ist.

Bei einer vorteilhaften Ausgestaltung ist jeder der Stege gekrümmt ausgebildet und/oder jede der Verbindungsflächen ist gekrümmt ausgebildet. Von Vorteil ist dabei, dass einerseits der Kraftfluss durchleitbar ist und andererseits eine hohe Steifigkeit der Tragstruktur erreichbar ist, insbesondere mit wenig Materialaufwand.

Erfindungsgemäß ist eine aus Kanälen gebildete Kanalstruktur in der Wandung des Getriebegehäuses, nämlich in der Tragstruktur ausgebildet. Von Vorteil ist dabei, dass kein zusätzliches Teil zum Leiten von Öl notwendig ist, insbesondere keine Verrohrung. Außerdem ist ein thermischer Ausgleich und somit eine möglichst gleichmäßige Temperatur im Getriebegehäuse erreichbar. Auf diese Weise ist eine effiziente Entwärmung erreichbar. Der für die Kanäle zusätzliche Materialaufwand ist geringfügig haltbar, da die hohle Struktur steifer ist.

Bei einer vorteilhaften Ausgestaltung weist die Kanalstruktur Verzweigungen auf, insbesondere wobei an der jeweiligen Verzweigung jeweils zumindest drei Kanäle ineinander münden. Von Vorteil ist dabei, dass erhöhte Steifigkeit und Stabilität sowie optimierte Raumbereichsausnutzung erreichbar ist.

Erfindungsgemäß mündet eine erste Mündungsöffnung eines ersten Kanals der Kanalstruktur in einer Sammelrinne und eine zweite Mündungsöffnung des ersten Kanals oder eines anderen Kanals der Kanalstruktur mündet in einer Lageraufnahme zur Schmierung eines Lagers, wobei das Getriebegehäuse derart geformt ist, dass nach oben gespritztes Öl zumindest teilweise der Sammelrinne zugeleitet wird. Von Vorteil ist dabei, dass die Zuleitung von Schmieröl eine verbesserte Schmierung und somit eine effizientere Ausnutzung des Getriebes ermöglicht.

Bei einer vorteilhaften Ausgestaltung mündet eine erste Mündungsöffnung eines zweiten Kanals in einer ersten Ölwanne des Getriebegehäuses und eine zweite Mündungsöffnung des zweiten Kanals in einer zweiten Ölwanne mündet,
wobei zwischen erster und zweiter Ölwanne eine Erhöhung am Getriebegehäuse ausgeformt ist, insbesondere also das Getriebegehäuse erhöht ausgeführt ist und/oder das Getriebegehäuse einen verengten lichten Querschnitt des Innenraumbereichs des Getriebegehäuses aufweist,
wobei die erste und die zweite Ölwanne jeweils ein Teilbereich des Getriebegehäuses ist. Von Vorteil ist dabei, dass eine Erhöhung des Ölpegels in derjenigen Ölwanne ermöglicht ist, welche bei Betrieb durch die Bewegung der Verzahnungsteile entleert würde oder zumindest deren Ölpegel abgesenkt werden würde.

Bei einer vorteilhaften Ausgestaltung verläuft jeder der Kanäle der Kanalstruktur jeweils gekrümmt und/oder weist zumindest an einer ersten Stelle einen anderen Querschnitt, insbesondere eine andere Querschnittsfläche und/oder einen anderen Querschnittsflächenwert, auf als eine einer zweiten Stelle, wobei die erste von der zweiten Stelle beabstandet ist. Von Vorteil ist dabei, dass die Kanäle derartig ausformbar sind, dass mit möglichst wenig Material eine hohe Steifigkeit und optimale Kraftdurchleitung ermöglicht ist, wobei die Querschnittsfläche des Kanals an allen Stellen des Kanals einen Schwellwert, insbesondere Mindestflächenwert, überschreitet.

Bei einer vorteilhaften Ausgestaltung mündet eine erste Mündungsöffnung eines zweiten Kanals in eine von der Tragstruktur samt Verbindungsflächen gebildete, als erste Ölwanne fungierende Vertiefung des Getriebegehäuses mündet und eine zweite Mündungsöffnung des zweiten Kanals in eine von der Tragstruktur samt Verbindungsflächen gebildete, als zweite Ölwanne fungierende Vertiefung des Getriebegehäuses,
wobei zwischen erster und zweiter Ölwanne das Getriebegehäuse einen verengten lichten Innendurchmesser oder Querschnitt des Innenraumbereichs des Getriebegehäuses aufweist
und/oder wobei zwischen erster und zweiter Ölwanne die Tragstruktur erhöht ist, insbesondere eine Erhöhung aufweist. Von Vorteil ist dabei, dass ein Ausgleich der Ölpegel, also ein Rückfluss von Öl und ein Erhöhen des bei Betrieb verminderten Ölpegels ermöglicht ist. Die zwischengeordnete Erhöhung oder Verengung hat den Vorteil, dass die Kontur des Getriebegehäuses der Einhüllenden der Verzahnungsteile möglichst enganliegend folgt.

Erfindungsgemäß ist zumindest eine der Lageraufnahmen und die Aufnahme für den Getriebedeckel als Gussteil gefertigt, wobei die Tragstruktur samt Verbindungsflächen additiv gefertigt sind, wobei das Getriebegehäuse als Verbundteil aus Lageraufnahmen und

Aufnahme für den Getriebedeckel und Tragstruktur samt Verbindungsflächen gefertigt ist. Von Vorteil ist dabei, dass das Getriebegehäuse als Verbundteil aus gussgefertigten Aufnahmen und additiv daran gefertigter Tragstruktur samt Verbindungsflächen herstellbar ist. Denn die Aufnahmen sind dann mit einer hohen Steifigkeit herstellbar und durch spanende Verfahren präzise herstellbar. Die bionische Form der Tragstruktur ist trotzdem realisierbar und materialsparend ausführbar.

Bei einer vorteilhaften Ausgestaltung ist das Getriebegehäuse aus Metall, insbesondere Aluminium, gefertigt, insbesondere additiv, gefertigt. Von Vorteil ist dabei, dass ein stabiles Metallgehäuse bereitstellbar ist. Dabei ist durch die additive Fertigung eine hohe Steifigkeit und Stabilität bei geringem Material aufwand ermöglicht. Außerdem ist die bionische Form der Tragstruktur samt Verbindungsflächen nicht durch klassisches Formgießen herstellbar - zumindest nicht in kostengünstiger Weise.

Weitere Vorteile ergeben sich aus den Unteransprüchen.

Die Erfindung wird nun anhand von schematischen Abbildungen näher erläutert:

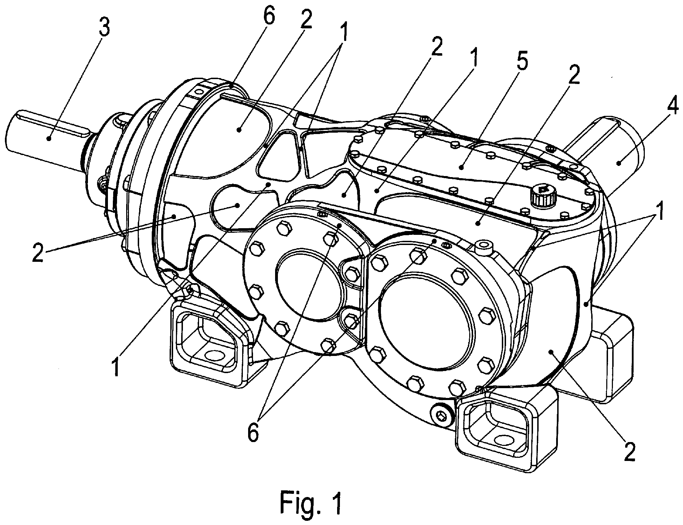

In der Figur 1 ist ein erfindungsgemäßes Getriebe mit Getriebegehäuse und Getriebedeckel 5 in Schrägansicht dargestellt.
In der Figur 2 ist im Unterschied zur Figur 1 das Getriebe bei entferntem Getriebedeckel dargestellt.

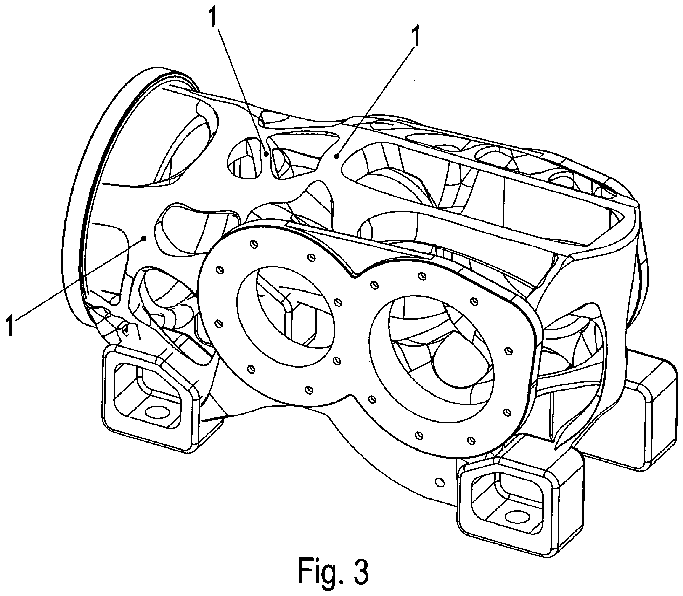

In der Figur 3 ist die aus Stegen 1 zusammen mit Lageraufnahmen 6 und Aufnahme für den Getriebedeckel 5 zusammengesetzte Tragstruktur dargestellt, wobei die Stege verbindende Verbindungsflächen entfernt sind

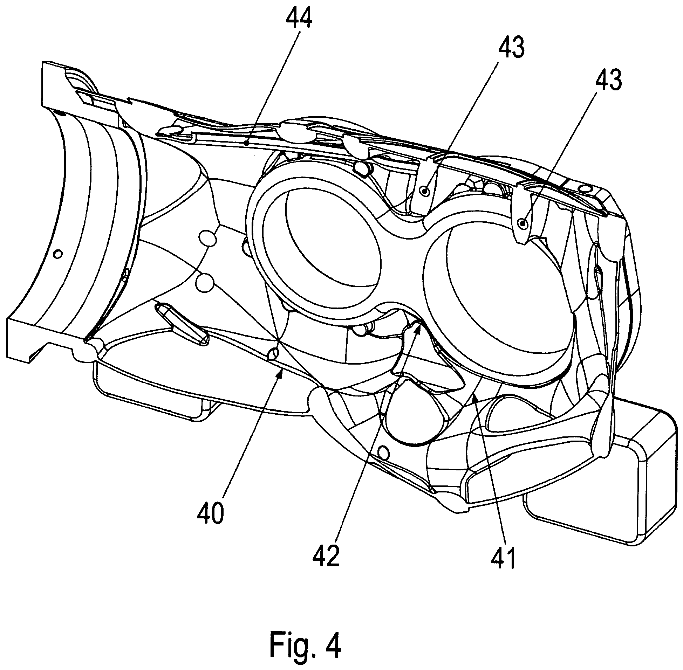

In der Figur 4 ist das Getriebegehäuse in Schnittansicht dargestellt.

Wie in den Figuren dargestellt, ist das Getriebegehäuse additiv gefertigt, insbesondere von einem 3D-Drucker. Vorzugsweise wird als Werkstoff für das Getriebegehäuse Metall, insbesondere Aluminium, verwendet.

Das Getriebegehäuse weist eine Tragstruktur auf, welche aus miteinander verbundenen Stegen 1 zusammengesetzt ist. Außerdem sind einige der Stege 1 mit der Lageraufnahme 6 und der Aufnahme für den Getriebedeckel 5 verbunden. Die Stege 1 sind jeweils verschieden ausgeformt. Insbesondere weisen sie jeweils eine gekrümmte Kontur auf. Jeder der Stege 1 weist vorzugsweise zumindest zwei unterschiedliche Querschnitte auf.

Die Tragstruktur ähnelt einem Gerippe. Verbindungsflächen 2 erstrecken sich über zwischen Stegen 1 jeweils frei liegende Flächen, so dass aus der Tragstruktur zusammen mit den Verbindungsflächen 2 ein öldichtes Getriebegehäuse gebildet ist.

Zumindest einer der Stege 1 erstreckt sich von einer ersten Stelle des Getriebegehäuses zu einer anderen Stelle des Getriebegehäuses, wobei dieser Steg 1 in den Innenraum hineinragt und zumindest abschnittsweise beabstandet ist vom Getriebegehäuse. Dieser Steg 1 ist somit hintergreifbar.

Die Tragstruktur dient im Wesentlichen der Kraftflussdurchleitung bei Betrieb des Getriebes.

Die Verbindungsflächen 2 weisen eine geringere Wandstärke auf als die Stege 1. Die Tragstruktur verbindet auch die Aufnahme für den Getriebedeckel 5 mit den Lageraufnahmen 6, so dass diese nicht nur gehalten sind, sondern im Betrieb auftretende Querkräfte durch die Tragstruktur geleitet werden. Die Verbindungsflächen 2 dienen hauptsächlich der Öldichtheit aber nicht der Kraftflussdurchleitung.

Jede der mehr als fünfzehn Verbindungsflächen 2 ist individuell geformt, insbesondere also unterscheidet sich von allen anderen Verbindungsflächen 2 des Getriebegehäuses, insbesondere ist jede der Verbindungsflächen gekrümmt. Ebenso ist jeder der mehr als fünfzehn Stege 1 individuell geformt, insbesondere unterscheidet sich also von allen anderen Stegen 1 des Getriebegehäuses.

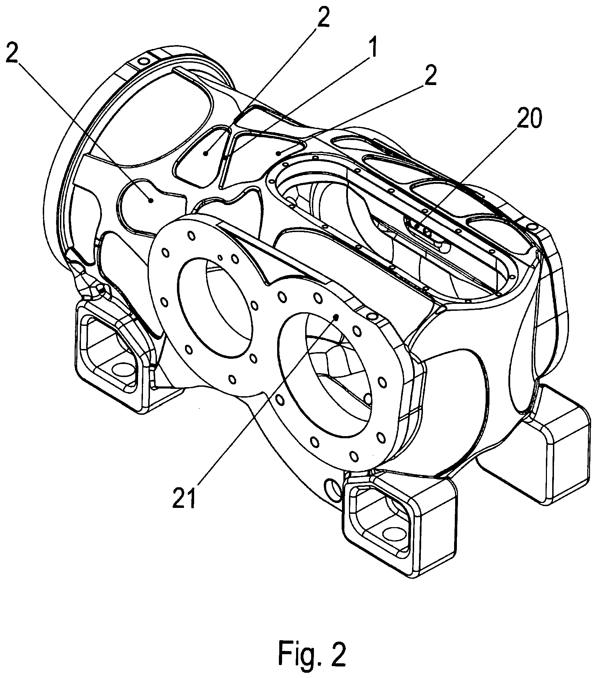

Wie in Figur 2 gezeigt, ist an der Innenseite des Getriebegehäuses eine Ölsammelrinne 20 ausgeformt. Außerdem ist im Innenraum des Getriebes ein Abstreifmittel vorgesehen, welcher das mittels des Abstreifmittels drehrichtungsunabhängig abgestreifte Öl der Ölsammelrinne 20 zuführt. Von dieser Ölsammelrinne 20 aus führen Kanäle 43 innerhalb der Tragstruktur zu Lagern, insbesondere Lageraufnahmen, insbesondere Lagerflanschen, hin, so dass die Lager geschmiert werden von dem aus der jeweiligen Mündungsöffnung 21 des jeweiligen Kanals austretenden Öls.

Jeder der von einer Mündungsöffnung eines jeweiligen Kanals bis zu einem in einen anderen Kanal mündenden Endbereich des jeweiligen Kanals oder bis zu einer anderen Mündungsöffnung des jeweiligen Kanals führenden Kanäle ist gekrümmt und weist zumindest zwei unterschiedliche Kanalquerschnitte auf, insbesondere und ist somit individuell, also einzigartig unter der Gesamtheit aller am Getriebegehäuse ausgebildeten Kanäle.

Ein weiterer Kanal ist im Getriebegehäuse integriert ausgeführt und verläuft dabei ebenfalls innerhalb der Wandung des Getriebegehäuses. Dieser weitere Kanal dient dem Ausgleich des Ölniveaus zwischen zwei Teilbereichen des Ölsumpfes des Getriebes. Denn das Getriebegehäuse ist derart geformt, dass es der Kontur der Verzahnungsteile möglichst nahekommt. Da das Getriebe zwei Zahnräder aufweist, deren Verzahnung miteinander im Eingriff sind und deren Drehachsen parallel ausgerichtet und voneinander beabstandet sind weist das Getriebegehäuse an seinem Boden zwei Vertiefungen auf, welche mittels einer Erhöhung 42 voneinander beabstandet sind und insbesondere jeweils als Ölwannen (40, 41) fungieren.

Der weitere Kanal mündet mit seiner ersten Mündungsöffnung in die erste Ölwanne 40 und mit seiner zweiten Mündungsöffnung in die zweite Ölwanne 41. Somit ist ein Ausgleich der beiden Ölpegel der beiden Ölwannen 40 und 41 ermöglicht. Der weitere Kanal unterquert die Erhöhung 42.

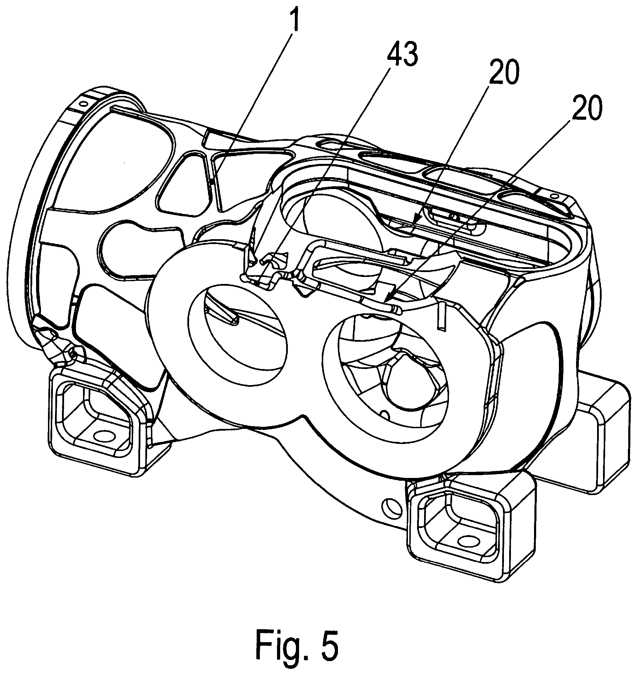

In Figur 5 ist die Ölsammelrinne 20 gezeigt, wobei das mittels des an der glatten Seitenfläche des drehenden Zahnrads, insbesondere Stirnrads, vom Abstreifmittel abgestreifte Öl in den Kanal 43 eingeleitet wird, der bis zu den Lageraufnahmen der Lager führt. Insbesondere ist eines der Lager dasjenige Lager, welches das Zahnrad drehbar lagert.

Erfindungsgemäß sind die Lageraufnahmen 6 und die Aufnahme für den Getriebedeckel 5 als Gussteile hergestellt und daran additiv, insbesondere mit 3D-Druck, die Tragstruktur samt Verbindungsflächen hergestellt.

### Bezugszeichenliste

1 Steg
2 Verbindungsfläche
3 eintreibende Welle
4 abtreibende Welle
5 Getriebedeckel
6 Lageraufnahme
20 Ölsammelrinne
21 Mündungsöffnung des Kanals
40 erster Ölwannenabschnitt
41 zweiter Ölwannenabschnitt
42 Erhöhung zwischen erstem und zweitem Ölwannenabschnitt
43 Kanal
44 weiterer Kanal

## Patentansprüche

1. Getriebe mit Getriebegehäuse, insbesondere Getriebegehäuseteil,
wobei das Getriebegehäuse eine aus Stegen (1) zusammengesetzte Tragstruktur aufweist und das Getriebegehäuse mit Stegen (1) der Tragstruktur verbundene Verbindungsflächen (2) aufweist,
wobei die Tragstruktur samt den Verbindungsflächen (2) additiv gefertigt sind, insbesondere mittels 3D-Druck,
insbesondere wobei die Verbindungsflächen (2) mit den Stegen (1) ein öldichtes Gehäuseteil bilden,
**dadurch gekennzeichnet, dass**
die Stege (1) miteinander und/ mit einer Lageraufnahme (6) und/ Aufnahme für einen Getriebedeckel (5) verbunden sind,
wobei zumindest eine der Lageraufnahmen (6) und/ die Aufnahme für den Getriebedeckel (5) als Gussteil gefertigt sind,
wobei die Tragstruktur samt Verbindungsflächen (2) additiv gefertigt sind,
wobei das Getriebegehäuse als Verbundteil aus Lageraufnahmen (6) und Aufnahme für den Getriebedeckel (5) und Tragstruktur samt Verbindungsflächen (2) gefertigt ist,
wobei eine aus Kanälen gebildete Kanalstruktur in der Wandung des Getriebegehäuses, nämlich in der Tragstruktur, ausgebildet ist,
wobei eine erste Mündungsöffnung (21) eines ersten Kanals der Kanalstruktur in einer Sammelrinne mündet und eine zweite Mündungsöffnung (21) des ersten Kanals oder eines anderen Kanals der Kanalstruktur in einer Lageraufnahme (6) mündet zur Schmierung eines Lagers,
wobei das Getriebegehäuse derart geformt ist, dass nach oben gespritztes Öl zumindest teilweise der Sammelrinne zugeleitet wird.

2. Getriebe nach Anspruch 1,
**dadurch gekennzeichnet, dass**
einer der Stege, insbesondere ein Henkel-förmiger Steg, zwei Stellen des Getriebedeckels (5) verbindet und von dem Getriebegehäuse, insbesondere von der Tragstruktur beabstandet ist.

3. Getriebe nach einem der vorangegangenen Ansprüche,
**dadurch gekennzeichnet, dass**
jeder Steg der Tragstruktur unterschiedlich geformt ist im Vergleich zu jedem anderen Steg der Tragstruktur,
und/oder dass
jede Verbindungsfläche (2) unterschiedlich geformt ist zu jeder anderen Verbindungsfläche (2) des Getriebegehäuses.

4. Getriebe nach einem der vorangegangenen Ansprüche,
**dadurch gekennzeichnet, dass**
jeder Steg an zwei unterschiedlichen Stellen zumindest zwei zueinander unterschiedliche Querschnittsflächen aufweist,
und/oder dass
jeder der Stege (1) gekrümmt ausgebildet ist und/oder dass jede der Verbindungsflächen (2) gekrümmt ausgebildet ist.

5. Getriebe nach einem der vorangegangenen Ansprüche,
**dadurch gekennzeichnet, dass**
die Kanalstruktur Verzweigungen aufweist,
insbesondere wobei an der jeweiligen Verzweigung jeweils zumindest drei Kanäle ineinander münden.

6. Getriebe nach einem der vorangegangenen Ansprüche,
**dadurch gekennzeichnet, dass**
eine erste Mündungsöffnung (21) eines zweiten Kanals in einer ersten Ölwanne des Getriebegehäuses mündet und eine zweite Mündungsöffnung (21) des zweiten Kanals in einer zweiten Ölwanne mündet,
wobei zwischen erster und zweiter Ölwanne eine Erhöhung am Getriebegehäuse ausgeformt ist, insbesondere also das Getriebegehäuse erhöht ausgeführt ist und/oder das Getriebegehäuse einen verengten lichten Querschnitt des Innenraumbereichs des Getriebegehäuses aufweist,
wobei die erste und die zweite Ölwanne jeweils ein Teilbereich des Getriebegehäuses ist.

7. Getriebe nach einem der vorangegangenen Ansprüche,
**dadurch gekennzeichnet, dass**
jeder der Kanäle der Kanalstruktur jeweils gekrümmt verläuft und/oder zumindest an einer ersten Stelle einen anderen Querschnitt, insbesondere eine andere Querschnittsfläche und/oder einen anderen Querschnittsflächenwert, aufweist als eine einer zweiten Stelle, wobei die erste von der zweiten Stelle beabstandet ist.

8. Getriebe nach einem der Ansprüche 1 bis 5,
**dadurch gekennzeichnet, dass**
eine erste Mündungsöffnung (21) eines zweiten Kanals in eine von der Tragstruktur samt Verbindungsflächen (2) gebildete, als erste Ölwanne fungierende Vertiefung des Getriebegehäuses mündet und eine zweite Mündungsöffnung (21) des zweiten Kanals in in eine von der Tragstruktur samt Verbindungsflächen (2) gebildete, als zweite Ölwanne fungierende Vertiefung des Getriebegehäuses mündet,
wobei zwischen erster und zweiter Ölwanne das Getriebegehäuse einen verengten lichten Innendurchmesser oder Querschnitt des Innenraumbereichs des Getriebegehäuses aufweist
und/oder wobei zwischen erster und zweiter Ölwanne die Tragstruktur erhöht ist, insbesondere eine Erhöhung aufweist.

9. Getriebe nach einem der vorangegangenen Ansprüche,
**dadurch gekennzeichnet, dass**
das Getriebegehäuse aus Metall, insbesondere Aluminium, gefertigt, insbesondere additiv gefertigt ist.

10. Getriebe nach einem der vorangegangenen Ansprüche,
**dadurch gekennzeichnet, dass**
in einer jeweiligen Lageraufnahme (6) ein jeweiliges Lager aufgenommen ist, welche ein jeweiliges Verzahnungsteil des Getriebes drehbar lagert,
wobei die Verzahnungen von Verzahnungsteilen miteinander im Eingriff sind,
wobei der vom Getriebegehäuse umgebene Innenraum des Getriebes zumindest teilweise mit Schmieröl befüllt ist,
wobei ein Getriebedeckel (5) in der Aufnahme für den Getriebedeckel (5) aufgenommen und mit dem Getriebegehäuse mittels Schrauben verbunden ist,
wobei die von der Aufnahme für den Getriebedeckel (5) umfasste Öffnung derart groß und geformt ist, dass eine Welle (3) und/oder ein Verzahnungsteil des Getriebes durch die Öffnung hindurchführbar ist oder sind.

## Claims

1. A gear unit having a gear-unit housing, in particular gear-unit housing part,
wherein the gear-unit housing has a support structure composed of webs (1) and the gear-unit housing has connecting surfaces (2) connected to webs (1) of the support structure, wherein the support structure together with the connecting surfaces (2) is additively produced, in particular by means of 3D printing,
in particular wherein the connecting surfaces (2) form an oil-tight housing part with the webs (1),
**characterised in that**
the webs (1) are connected to one another and to a bearing receiver (6) and receiver for a gear-unit cover (5),
wherein at least one of the bearing receivers (6) and the receiver for the gear-unit cover (5) are manufactured as a casting,
wherein the support structure together with connecting surfaces (2) are additively produced, wherein the gear-unit housing is produced as a composite part of bearing receivers (6) and receiver for the gear-unit cover (5) and support structure together with connecting surfaces (2), wherein a channel structure formed from channels is formed in the wall of the gear-unit housing, namely in the support structure,
wherein a first mouth opening (21) of a first channel of the channel structure opens in a collection trough and a second mouth opening (21) of the first channel or another channel of the channel structure opens in a bearing receiver (6) for lubrication of a bearing,
wherein the gear-unit housing is formed such that upwards sprayed oil is at least partially fed to the collection trough.

2. A gear unit according to claim 1,
**characterised in that**
one of the webs, in particular a handle-shaped web, connects two sites of the gear-unit cover (5) and is at a distance from the gear-unit housing, in particular from the support structure.

3. A gear unit according to any one of the preceding claims,
**characterised in that**
each web of the support structure is shaped differently compared to any other web of the support structure,
and/or **in that**
each connecting surface (2) is shaped differently to any other connecting surface (2) of the gear-unit housing.

4. A gear unit according to any one of the preceding claims,
**characterised in that**
each web has at least two differing cross-sectional surfaces at two different sites,
and/or **in that**
each of the webs (1) is curved and/or **in that** each of the connecting surfaces (2) is curved.

5. A gear unit according to any one of the preceding claims,
**characterised in that**
the channel structure has branches,
in particular wherein at the respective branch, at least three channels open into one another in each case.

6. A gear unit according to any one of the preceding claims,
**characterised in that**
a first mouth opening (21) of a second channel opens in a first oil pan of the gear-unit housing and a second mouth opening (21) of the second channel opens in a second oil pan, wherein between first and second oil pan there is formed a raised region at the gear-unit housing, in particular therefore the gear-unit housing is raised and/or the gear-unit housing has a narrowed inside cross-section of the interior region of the gear-unit housing,
wherein the first and the second oil pan are in each case a partial region of the gear-unit housing.

7. A gear unit according to any one of the preceding claims,
**characterised in that**
each of the channels of the channel structure is in each case curved and/or at least at a first location has a different cross-section, in particular a different cross-sectional surface and/or a different cross-sectional surface value, from a second location,
wherein the first location is spaced apart from the second location.

8. A gear unit according to any one of claims 1 to 5,
**characterised in that**
a first mouth opening (21) of a second channel opens into a depression, which is formed by the support structure together with connecting surfaces (2) and which functions as a first oil pan, of the gear-unit housing and a second mouth opening (21) of the second channel opens into a depression, which is formed by the support structure together with connection surfaces (2) and which functions as a second oil pan, of the gear-unit housing,
wherein between first and second oil pan, the gear-unit housing has a narrowed inside diameter or cross-section of the interior region of the gear-unit housing,
and/or wherein the support structure is raised between first and second oil pan, in particular has a raised region.

9. A gear unit according to any one of the preceding claims,
**characterised in that**
the gear-unit housing is produced, in particular additively, of metal, in particular aluminium.

10. A gear unit according to any one of the preceding claims,
**characterised in that**
in a respective bearing receiver (6) there is received a respective bearing which rotatably supports a respective toothing part of the gear unit,
wherein the toothings of toothing parts mesh,
wherein the interior, surrounded by the gear-unit housing, of the gear unit is at least partially filled with lubricating oil,
wherein a gear-unit cover (5) is received in the receiver for the gear-unit cover (5) and is connected to the gear-unit housing by means of screws,
wherein the opening encompassed by the receiver for the gear-unit cover (5) is such in size and shape that a shaft (3) and/or a toothing part of the gear unit is or are guidable through the opening.

## Revendications

1. Boîte de vitesses avec carter de boîte de vitesses, en particulier partie carter de boîte de vitesses,
le carter de boîte de vitesses présentant une structure porteuse composée de nervures (1) et le carter de boîte de vitesses présentant des surfaces de liaison (2) reliées aux nervures (1) de la structure porteuse,
la structure porteuse ainsi que les surfaces de liaison (2) étant fabriquées de manière additive, en particulier par impression 3D,
les surfaces de liaison (2) et les nervures (1) formant une partie carter étanche à l'huile, **caractérisée en ce que**
les nervures (1) sont reliées les unes aux autres et/ou à un logement de palier (6) et/ou à un logement destiné à un couvercle de boîte de vitesses (5),
au moins un des logements de palier (6) et le logement destiné au couvercle de boîte de vitesses (5) étant fabriqués sous forme de pièce moulée,
la structure porteuse ainsi que les surfaces de liaison (2) étant fabriquées de manière additive,
le carter de boîte de vitesses étant fabriqué sous la forme d'un élément composite constitué des logements de palier (6) et du logement destiné au couvercle de boîte de vitesses (5) et de la structure porteuse ainsi que des surfaces de liaison (2),
une structure de canal formée de canaux étant réalisée dans la paroi du carter de boîte de vitesses, à savoir dans la structure porteuse,
un premier orifice formant bouche (21) d'un premier canal de la structure de canal débouchant dans une goulotte collectrice et un second orifice formant bouche (21) du premier canal ou d'un autre canal de la structure de canal débouchant dans un logement de palier (6) en vue de la lubrification d'un palier,
le carter de boîte de vitesses étant formé de telle manière que de l'huile pulvérisée vers le haut est au moins partiellement acheminée vers la goulotte collectrice.

2. Boîte de vitesses selon la revendication 1,
**caractérisée en ce que**
une des nervures, en particulier une nervure en forme d'anse, relie deux emplacements du couvercle de boîte de vitesses (5) et est espacée par rapport au carter de boîte de vitesses, en particulier par rapport à la structure porteuse.

3. Boîte de vitesses selon l'une quelconque des revendications précédentes,
**caractérisée en ce que**
chaque nervure de la structure porteuse a une forme différente de celle de chaque autre nervure de la structure porteuse,
et/ou **en ce que**
chaque surface de liaison (2) a une forme différente de chaque autre surface de liaison (2) du carter de boîte de vitesses.

4. Boîte de vitesses selon l'une quelconque des revendications précédentes,
**caractérisée en ce que**
chaque nervure présente au moins deux surfaces de section transversale différentes l'une de l'autre au niveau de deux emplacements différents,
et/ou **en ce que**
chacune des nervures (1) est réalisée de manière incurvée et/ou **en ce que** chacune des surfaces de liaison (2) est réalisée de manière incurvée.

5. Boîte de vitesses selon l'une quelconque des revendications précédentes,
**caractérisée en ce que**
la structure de canal présente des ramifications,
en particulier respectivement au moins trois canaux débouchant l'un dans l'autre au niveau de la ramification respective.

6. Boîte de vitesses selon l'une quelconque des revendications précédentes,
**caractérisée en ce que**
un premier orifice formant bouche (21) d'un second canal débouchant dans un premier carter d'huile du carter de boîte de vitesses et un second orifice formant bouche (21) du second canal débouchant dans un second carter d'huile,
une surélévation étant formée sur le carter de boîte de vitesses entre les premier et second carters d'huile, le carter de boîte de vitesses étant en particulier réalisé de manière surélevée et/ou le carter de boîte de vitesses présentant une section transversale intérieure restreint dans la région intérieure du carter de boîte de vitesses, les premier et second carters d'huile constituant respectivement une sous-région du carter de boîte de vitesses.

7. Boîte de vitesses selon l'une quelconque des revendications précédentes,
**caractérisée en ce que**
chacun des canaux de la structure de canal est incurvé et/ou, au moins au niveau d'un premier emplacement, présente une section transversale, en particulier une surface de section transversale et/ou une valeur de surface de section transversale, différente de celle située au niveau d'un second emplacement, le premier emplacement se trouvant à distance du second emplacement.

8. Boîte de vitesses selon l'une quelconque des revendications 1 à 5,
**caractérisée en ce que**
un premier orifice formant bouche (21) d'un second canal débouche dans un renfoncement du carter de boîte de vitesses qui est formé par la structure porteuse ainsi que par les surfaces de liaison (2) et qui fait office de premier carter d'huile, et un second orifice formant bouche (21) du second canal débouche dans un renfoncement du carter de boîte de vitesses qui est formé par la structure porteuse ainsi que par les surfaces de liaison (2) et qui fait office de second carter d'huile,
le carter de boîte de vitesses présentant entre les premier et second carters d'huile un diamètre ou une section transversale intérieur(e) restreint(e) dans la région intérieure du carter de boîte de vitesses
et/ou la structure porteuse étant surélevée, en particulier présentant une surélévation, entre les premier et second carters d'huile.

9. Boîte de vitesses selon l'une quelconque des revendications précédentes,
**caractérisée en ce que**
le carter de boîte de vitesses est fabriqué en métal, en particulier en aluminium, en particulier de manière additive.

10. Boîte de vitesses selon l'une quelconque des revendications précédentes,
**caractérisée en ce que**
un palier respectif supportant de manière rotative une pièce dentée respective de la boîte de vitesses est logé dans un logement de palier (6) respectif,
les dentures des pièces dentées étant en prise les unes avec les autres,
l'espace intérieur de la boîte de vitesses entouré par le carter de boîte de vitesses étant au moins partiellement rempli d'huile de lubrification,
un couvercle de boîte de vitesses (5) étant logé dans le logement destiné au couvercle de boîte de vitesses (5) et étant relié au carter de boîte de vitesses au moyen de vis, l'orifice entouré par le logement destiné au couvercle de boîte de vitesses (5) étant d'une taille et d'une forme telles qu'un arbre (3) et/ou une partie dentée de la boîte de vitesses peut ou peuvent passer à travers l'orifice.
